# EUROPEAN PATENT APPLICATION

(11) **EP 4 459 119 A1**
(43) Date of publication of application: **06.11.2024**
(21) Application number: 23752783.3
(22) Date of filing: 03.02.2023
(51) Int. Cl.: F02D 45/00, F02D 41/22

(54) **ENGINE MISFIRE DETECTION DEVICE AND MISFIRE DETECTION METHOD**

(30) Priority: 08.02.2022 JP 2022018214
(71) Applicant: MITSUBISHI HEAVY INDUSTRIES ENGINE & TURBOCHARGER, LTD., Sagamihara-shi, Kanagawa 252-5293 (JP)
(72) Inventor: ANDO, Junnosuke, Tokyo 100-8332 (JP); YOSHIZUMI, Hiroshi, Sagamihara-shi, Kanagawa 252-5293 (JP); KAWAI, Kazuhiro, Sagamihara-shi, Kanagawa 252-5293 (JP); KOAKUTSU, Takahiro, Sagamihara-shi, Kanagawa 252-5293 (JP)
(74) Representative: Studio Torta S.p.A.
(86) International application number: PCT/JP2023/003487
(87) International publication number: WO 2023/153318

(57) **Abstract**

A misfire detection device for an engine, includes: a misfire detection part for detecting a misfire state in at least one cylinder of the engine; an effective misfire determination part for determining, on the basis of an unburned parameter that is an indicator of an unburned fuel concentration in an exhaust gas duct, a risk of unburned fuel in the exhaust gas duct burning, when the misfire detection part detects the misfire state; and an engine stop processing control part for performing stop processing of the engine on the basis of a determination result in the effective misfire determination part.

## Description

### TECHNICAL FIELD

The present disclosure relates to a misfire detection device and a misfire detection method for an engine.

This application claims the priority of Japanese Patent Application No. 2022-018214 filed on February 8, 2022, the content of which is incorporated herein by reference.

### BACKGROUND

In an engine, if a misfire (non-combustion state) occurs while fuel is being supplied, unburned fuel leaks into an exhaust system and, in the worst case, the unburned fuel may burn in an exhaust gas duct, causing damage to a device or leading to an accident. In order to prevent this, various methods are used to detect the misfire of the engine, and if the frequency or number of misfires reaches or exceeds a certain level, control to stop the engine is used as a protective action (Patent Document 1).

Meanwhile, in a transient state involving a sudden change in load or rotation speed, such as during load rejection, fuel supply may temporarily be restricted by governor control, and even during this period, a misfire may occur due to the reduced fuel supply, which may lead to stop of the engine if the above-described control is applied. However, in this case, since a fuel supply amount itself during the misfire is small, an unburned gas concentration in an exhaust gas is extremely low, and there are often almost no risks of leading to combustion in the exhaust gas duct. As a result, the engine may be stopped even though there is no actual safety issue, which may cause an operational problem.

For example, in an engine for private power generation, when a system power outage occurs due to a lightning strike, etc., the engine may be disconnected from a system and temporarily allowed to survive with no load or minimal load before power supply into a private facility is resumed. However, if the above-described control is in place, the engine stops as soon as the engine is disconnected from the system and the load suddenly changes, and it takes time to restore power to the private facility. In the worst case, the power outage may make it impossible to restart the engine and to restore power.

As a means for solving this problem, Patent Document 2 discloses that an intentional misfire due to control is distinguished from a misfire due to another reason such as a malfunction, and a warning is not issued in the former.

### Citation List

### Patent Literature

Patent Document 1: JP6441291B
Patent Document 2: JP2009-121453A

### SUMMARY

### Technical Problem

As described above, Patent Document 2 discloses that the misfire due to control (intentional misfire) is distinguished from the misfire due to the malfunction, etc., other than control, and the warning is not issued in the case of the misfire due to control (intentional misfire). However, there is also a case where combustion does not occur in the exhaust gas duct even if the misfire is due to not control but the malfunction, etc., (for example, a temporary fuel supply failure, excessive air amount, etc.), and in such a case, issuing the warning may result in over-detection. Further, Patent Document 2 merely discloses determining the presence or absence of the issuance of the warning, and does not mention the protective action such as stopping of the engine.

The present disclosure was made in view of the above, and an object of the present disclosure is to provide the misfire detection device and the misfire detection method for the engine, which are capable of continuing operation while ensuring safety by stopping the engine through monitoring of the misfire that leads to the combustion in the exhaust gas duct.

### Solution to Problem

In order to achieve the above object, a misfire detection device for an engine according to the present disclosure, includes: a misfire detection part for detecting a misfire state in at least one cylinder of the engine; an effective misfire determination part for determining, on the basis of an unburned parameter that is an indicator of an unburned fuel concentration in an exhaust gas duct, a risk of unburned fuel in the exhaust gas duct burning, when the misfire detection part detects the misfire state; and an engine stop processing control part for performing stop processing of the engine on the basis of a determination result in the effective misfire determination part.

Further, a misfire detection method for an engine according to the present disclosure, includes: a misfire detection step of detecting a misfire state in at least one cylinder of the engine; an effective misfire determination step of determining, on the basis of an unburned parameter that is an indicator of an unburned fuel concentration in an exhaust gas duct, a risk of unburned fuel in the exhaust gas duct burning, when the misfire state is detected in the misfire detection step; and an engine stop processing control step of performing stop processing of the engine on the basis of a determination result in the effective misfire determination step.

### Advantageous Effects

According to the misfire detection device for the engine of the present disclosure, when the misfire detection part detects the misfire state, the effective misfire determination part determines, on the basis of the unburned parameter that is the indicator of the unburned fuel concentration in the exhaust gas duct, whether or not the misfire is the misfire (effective misfire) that poses the risk of leading to the combustion of the unburned fuel in the gas duct. Therefore, in the case where the unburned fuel does not burn in the exhaust gas duct even if the misfire occurs due to not control but the malfunction, etc., it is possible to improve operational continuity by excluding the case from the protective action of stopping the engine. That is, it is possible to improve the operational continuity while ensuring safety by stopping the engine through monitoring of only the effective misfire that poses the risk of leading to the combustion of the unburned fuel in the exhaust gas duct.

Further, according to the misfire detection method for the engine of the present disclosure, when the misfire state is detected by the misfire detection step, whether or not the misfire is the misfire (effective misfire) that poses the risk of leading to the combustion of the unburned fuel in the exhaust gas duct is determined by the effective misfire determination step on the basis of the unburned parameter that is the indicator of the unburned fuel concentration in the gas duct. Therefore, in the case where the unburned fuel does not burn in the exhaust gas duct even if the misfire occurs due to not control but the malfunction, etc., it is possible to improve the operational continuity by excluding the case from the protective action of stopping the engine. That is, it is possible to improve the operational continuity while ensuring safety by stopping the engine through monitoring of only the effective misfire that poses the risk of leading to the combustion of the unburned fuel in the exhaust gas duct.

### BRIEF DESCRIPTION OF DRAWINGS

FIG. 1 is an overall schematic configuration diagram of a misfire detection device and a misfire detection method for an engine, which are applied to a gas engine, and is a control block diagram of the misfire detection method according to the first embodiment of the present disclosure.
FIG. 2 is a control block diagram and a schematic configuration diagram showing a modified example of an engine stop processing control part 13 in the first embodiment of FIG. 1.
FIG. 3 is an overall schematic configuration diagram of the misfire detection device and the misfire detection method for the engine, which re applied to the gas engine, and is a control block diagram of the misfire detection method according to the second embodiment. FIG. 3 is a diagram corresponding to FIG. 1.
FIG. 4 is an overall schematic configuration diagram of the misfire detection device and the misfire detection method for the engine, which are applied to the gas engine, and is a control block diagram of the misfire detection method according to the third embodiment. FIG. 4 is a diagram corresponding to FIG. 1.
FIG. 5A shows a behavior of an engine output during load rejection of the engine, in the second embodiment of FIG. 3.
FIG. 5B shows a behavior of an engine speed during the load rejection of the engine.
FIG. 5C shows a behavior of a governor opening degree (fuel amount) during the load rejection of the engine.
FIG. 5D shows a behavior of an air-fuel mixture (air excess ratio) during the load rejection of the engine.
FIG. 5E shows a change in presence or absence of a misfire during the load rejection of the engine.
FIG. 5F shows a change in the number of misfires, the number of effective misfires during the load rejection of the engine.
FIG. 6 shows a comparative example, and is a control block diagram of a conventional misfire detection device for the engine.

### DETAILED DESCRIPTION

Hereinafter, a misfire detection device and a misfire detection method for an engine according to embodiments of the present disclosure will be described with reference to configuration diagrams and control block diagrams. The embodiments each indicate one aspect of the present disclosure, do not intend to limit this disclosure, and can optionally be modified within a scope of a technical idea of the present disclosure.

### <First Embodiment>

### (Configuration)

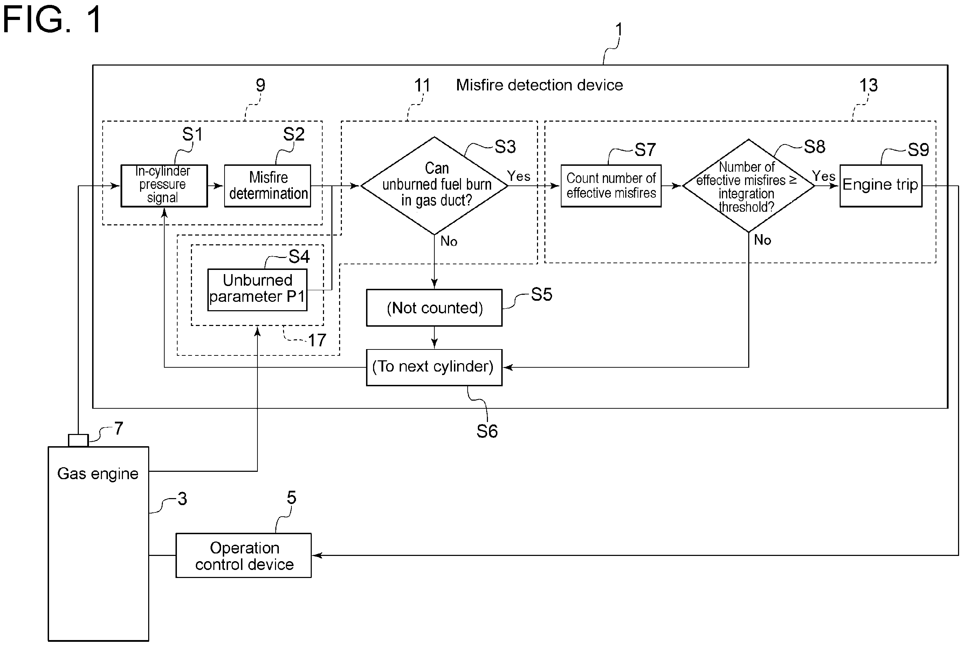

FIG. 1 is an overall schematic configuration diagram showing a misfire detection device 1 and a misfire detection method for an engine and showing a case where the misfire detection device 1 is applied to a gas engine 3, and is a control block diagram showing control of the misfire detection method executed in the misfire detection device 1 according to the first embodiment. The engine is not limited to the gas engine 3, but is shown as an example.

The gas engine 3 is a four-stroke reciprocating engine fueled by a fuel gas, and has at least one cylinder. Further, the gas engine 3 is provided with a fuel supply means (not shown) for supplying the gas fuel into each cylinder and an air supply means (not shown) for supplying combustion air into each cylinder, and is also provided with an operation control device 5 for controlling amounts of the gas fuel and the combustion air, which are supplied from these supply means into the cylinder, to control an operating state of the gas engine 3.

Further, each cylinder is installed with an in-cylinder pressure sensor 7 for detecting an in-cylinder pressure of a combustion chamber, and a detection signal from the in-cylinder pressure sensor 7 is input to the misfire detection device 1.

As shown in FIG. 1, the misfire detection device 1 includes a misfire detection part 9 for detecting a misfire state in at least one cylinder of the gas engine 3, an effective misfire determination part 11 for determining, on the basis of an unburned parameter that is an indicator of an unburned fuel concentration in an exhaust gas duct, a risk of unburned fuel in the exhaust gas duct burning, when the misfire detection part 9 detects the misfire state, and an engine stop processing control part 13 for performing stop processing of the gas engine 3 on the basis of a determination result in the effective misfire determination part 11.

The misfire detection part 9 of the misfire detection device 1 determines that a misfire has occurred if, for example, a combustion pressure of each cylinder from the in-cylinder pressure sensor 7 is less than a pressure range during normal combustion.

When the misfire detection part 9 detects the misfire state, the effective misfire determination part 11 determines, on the basis of an unburned parameter P1 that is an indicator of the unburned fuel concentration in the exhaust gas duct where an exhaust gas from the gas engine 3 during the misfire flows, whether or not the misfire is an effective misfire having a risk of the unburned fuel in the exhaust gas discharged from inside the cylinder burning in the exhaust gas duct. It is configured such that the effective misfire is determined by comparing a value of the unburned parameter P1, which is acquired by an unburned parameter acquisition portion 17, with an effective misfire determination threshold of the unburned parameter.

The unburned parameter P1 is calculated or estimated by the unburned parameter acquisition portion 17 provided in the effective misfire determination part 11, on the basis of an operating state signal from the gas engine 3 and an exhaust gas state signal from the exhaust gas.

Further, the unburned parameter P1 is, for example, an air-fuel ratio parameter P2 that is an indicator of an air-fuel ratio in the at least one cylinder as in the second embodiment described later, and is also an exhaust gas composition parameter P3 based on a composition of the exhaust gas flowing in the exhaust gas duct as in the third embodiment described later. Then, the effective misfire determination threshold is set in consideration of these parameters as well and on the basis of a value at which occurrence of the combustion of the unburned fuel in the exhaust gas duct may be determined in advance through testing, simulation, or the like.

The engine stop processing control part 13 calculates an integrated value by counting the number of determinations of effective misfires from the effective misfire determination part 11 in a past certain time or a past certain cycle, determines whether or not the integrated value exceeds a predetermined integration threshold, and performs the stop processing of the engine if the integrated value exceeds the predetermined integration threshold.

As described above, since the engine stop processing control part 13 calculates the integrated value of the number of determinations of the effective misfires from the effective misfire determination part 11 in the past certain time or the past certain cycle, and performs the stop processing of the engine if the integrated value exceeds the predetermined integration threshold, old misfires disappear over time. Therefore, the risk of the combustion in the exhaust gas duct can be determined in the most recent misfire state, and the stop processing of the engine can be executed on the basis of the determination result.

The stop processing of the engine is performed by sending a stop command from the engine stop processing control part 13 to the operation control device 5, thereby causing the operation control device 5 to stop the supply of the gas fuel to the gas engine 3 and to stop ignition, or either to stop the supply of the gas fuel or to stop the ignition.

The stop processing of the engine in the engine stop processing control part 13 may be performed when a determination result in which the integrated value of the number of determinations of the effective misfires is not less than the integration threshold occurs in a single control in a control period or when the determination result continues to occur in succession in multiple consecutive controls.

In some embodiments, the integration threshold and the past certain time or the past certain cycle which is a calculation range of the integrated value in the engine stop processing control part 13 are set to larger values from startup to low load than at high load.

This is because at startup or in a low load range, combustion becomes unstable and a sporadic misfire is likely to occur, so the integrated value is likely to be larger than in a high load range, and the same threshold is likely to lead to engine stop procedures. Meanwhile, this is because an absolute amount of the fuel gas supplied is small in this range, and even if combustion occurs in the exhaust gas duct, damage caused by the combustion is small.

As an example of the past certain cycle, for example, in the case of the 20-cylinder gas engine 3 (20 cylinders burn during one cycle), 5 to 20 cycles are set from startup to low load and 1 to 3 cycles are set at high load. More preferably, 10 cycles (200 cylinders) are set from startup to low load and 2 cycles (40 cylinders) are set at high load.

Then, if an integrated value of the number of cylinders with effective misfires among the number of monitored cylinders N (among the number of cylinders in the past certain cycle monitored per control period) is not less than the number of integration threshold cylinders C in the set past certain cycle, it is determined that there is the risk of the combustion in the exhaust gas duct, and the gas engine 3 is stopped. A specific example is shown in Table 1.

**[Table 1]**

| Operating range | Threshold | |
|---|---|---|
| | The number of monitored cylinders (the number of monitored cycles) | The number of integration threshold cylinders |
| | N | C |
| Startup to low load | 200 (10 cycles) | 190 |
| High load | 40 (2 cycles) | 38 |

In the example of Table 1, the ratio of the number of integration threshold cylinders to the number of monitored cylinders is the same from startup to low load and at high load, but the number of monitored cylinders is larger at startup to low load. This suppresses unnecessary engine stop due to a transient event caused by the fact that combustion becomes unstable and the sporadic misfire is likely to occur at startup or in the low load range.

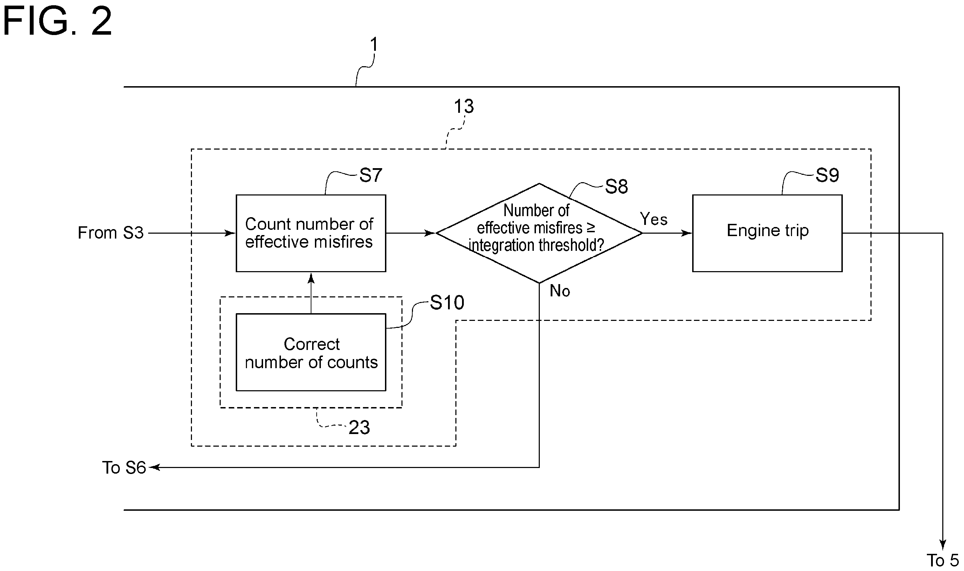

Further, in some embodiments, FIG. 2 shows a modified example of the engine stop processing control part 13, and the engine stop processing control part 13 is provided with a number-of-effective-misfires correction portion 23. The number-of-effective-misfires correction portion 23 weights the integrated value in calculating the integrated value of the number of determinations of the effective misfires from the effective misfire determination part 11.

That is, the effective misfire determination part 11 is configured to determine the risk of the unburned fuel in the exhaust gas duct burning, by comparing the unburned parameter P1 with the effective misfire determination threshold, and the integrated value of the number of determinations of the effective misfires in the engine stop processing control part 13 is weighted in accordance with the magnitude of the unburned parameter P1 in calculating the integrated value.

For example, when the misfire is determined to be the effective misfire in a state where there is a particularly high possibility of combustion in the gas duct or in a state where damage during combustion is heavy, such as when the unburned parameter P1 greatly exceeds the threshold, the integrated value is calculated on the basis of the weighted number of times, such as 1.5 times instead of 1 time for the number of determinations of the effective misfires. Instead of correcting each time, if the number of determinations of the effective misfires is 10 times as the integrated value, the resulting integrated value may be corrected to 15 times instead of 10 times.

Since the engine stop processing control part 13 has the number-of-effective-misfires correction portion 23 for performing weighting in calculating the integrated value of the number of determinations of the effective misfires in accordance with the magnitude of the unburned parameter P1 in calculating the integrated value, reliability of the engine stop processing is improved, and it is possible to improve the operational continuity while ensuring safety.

Next, a control flow of the misfire detection method will be described with reference to the control block diagram of the misfire detection method shown in FIG. 1.

First, in step S1, an in-cylinder pressure signal is acquired from the in-cylinder pressure sensor 7. In next step S2, it is determined whether or not the in-cylinder pressure is less than the pressure range during normal combustion, and if the in-cylinder pressure is less, it is determined that the misfire has occurred.

In next step S3, it is determined whether or not the misfire is the effective misfire having the risk of the unburned fuel in the exhaust gas discharged from inside the cylinder burning in the exhaust gas duct where the exhaust gas from the gas engine 3 during the misfire flows.

The determination in step S3 takes in the value of the unburned parameter P1 calculated or estimated by the unburned parameter acquisition portion 17 in step S4, compares the value of the unburned parameter P1 with the effective misfire determination threshold, and if the value of the unburned parameter P1 is greater than the effective misfire determination threshold, determines that the misfire is the effective misfire.

If the determination result in step S3 is determined to be the effective misfire, the result is Yes, and the process proceeds to step S7 in which the number of determinations of the effective misfires is counted. That is, the integrated value is calculated. The calculation of the integrated value calculates the integrated value of the number of determinations of the effective misfires in the past certain time or the past certain cycle.

Further, in the case of having the number-of-effective-misfires correction portion 23 shown in FIG. 2, the integrated value of the number of determinations corrected by the number-of-effective-misfires correction portion 23 is calculated.

Then, in next step S8, it is determined whether or not the integrated value of the number of effective misfires calculated in step S7 is not less than the integration threshold, if the integrated value is not less than the integration threshold, the result is Yes and the process proceeds to step S9 in which engine trip (engine stop) is performed.

On the other hand, if the determination result in step S3 is No, the process moves to the next cylinder in step S6 without counting the number of determinations of the effective misfires in step S5, and the process from step S1 is repeated.

Steps S1 and S2 constitute a misfire detection step, steps S3 and S4 constitute an effective misfire determination step, and steps S7 to S9 constitute an engine stop processing step.

### (Operation/Effect)

With the above-described misfire detection device 1 for the engine according to the first embodiment, when the misfire detection part 9 detects the misfire state, the effective misfire determination part 11 determines, on the basis of the unburned parameter P1 that is the indicator of the unburned fuel concentration in the exhaust gas duct, whether or not the misfire is the effective misfire posing the risk of leading to the combustion of the unburned fuel in the gas duct. Therefore, in the case where the unburned fuel does not burn in the exhaust gas duct even if the misfire occurs due to not control but the malfunction, etc., it is possible to improve the operational continuity by excluding the case from the protective action of stopping the gas engine 3. That is, it is possible to improve the operational continuity while ensuring safety by stopping the gas engine 3 through monitoring of only the effective misfire that poses the risk of leading to the combustion of the unburned fuel in the exhaust gas duct.

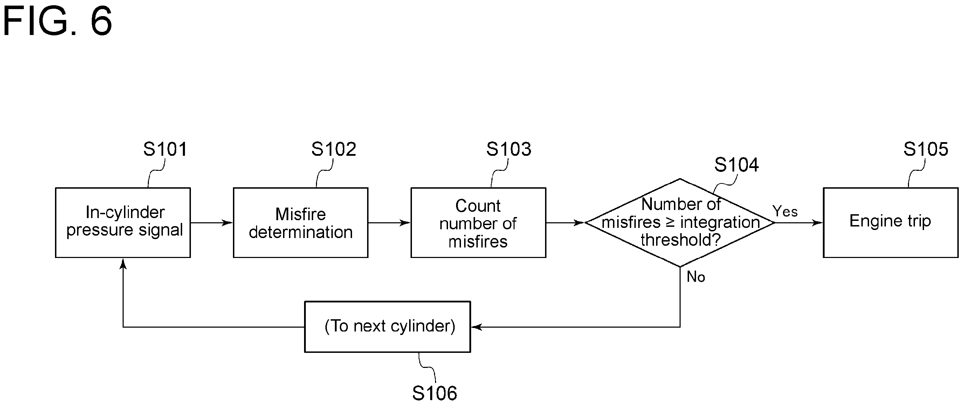

FIG. 6 is a control block diagram of a conventional misfire detection device for the engine, which is a comparative example of the present embodiment. In this example, the in-cylinder pressure signal is acquired in step S101, it is determined in next step S102 whether or not the in-cylinder pressure is less than the pressure range during normal combustion, the number of misfires less than the pressure range during normal combustion is counted in next step S103, it is determined in next step S104 whether or not the number of counts for a predetermined time is not less than the threshold, if the number of counts is not less than the threshold, the process proceeds to step S105 in which the engine trip (engine stop) processing is performed, if the number of counts is less than the threshold, the process proceeds to step S106 to move to the next cylinder, and the process is repeated from step S101.

In the comparative example shown in FIG. 6, the occurrence of the misfire is determined based only on whether or not the in-cylinder pressure is less than the pressure range during normal combustion. Consequently, even if the misfire does not pose the risk of leading to the combustion of the unburned fuel in the exhaust gas duct, the engine stops, which may cause an operational problem.

Relative to the comparative example of FIG. 6, in the present embodiment, it is possible to improve the operational continuity while ensuring safety by stopping the gas engine 3 through monitoring by the effective misfire determination part 11 of the effective misfire that poses the risk of leading to the combustion of the unburned fuel in the exhaust gas duct.

### <Second Embodiment>

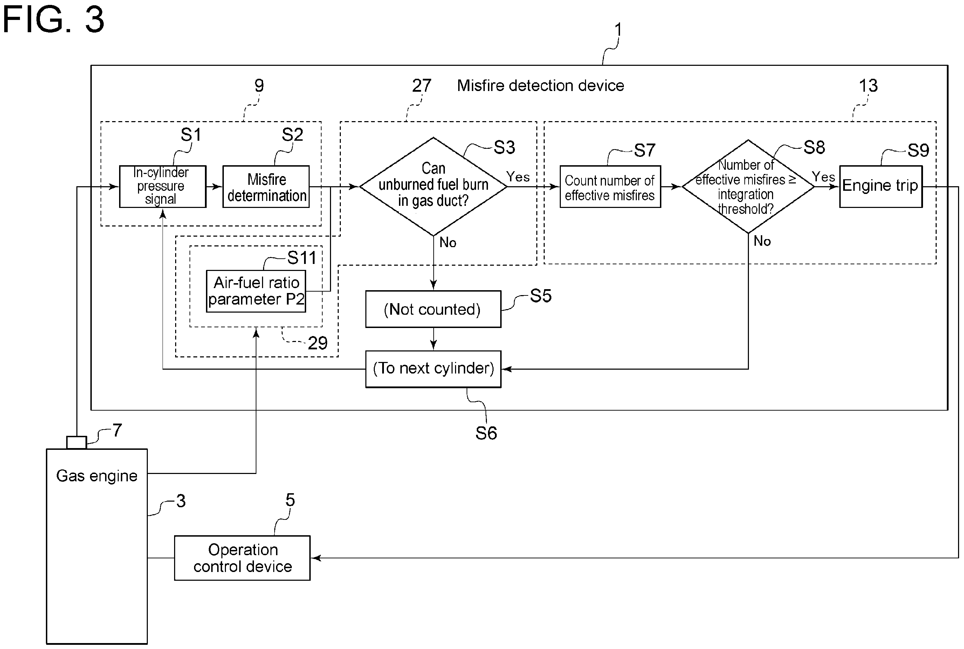

The second embodiment will be described with reference to FIG. 3. The second embodiment is different from the first embodiment in an effective misfire determination part 27. In the second embodiment, the unburned parameter P1 of the first embodiment is the air-fuel ratio parameter P2 that is the indicator of the air-fuel ratio in the at least one cylinder, and the effective misfire determination part 27 determines the effective misfire on the basis of the air-fuel ratio parameter P2. In the second embodiment, the same constituent elements as those in the first embodiment are associated with the same reference signs and not described again in detail.

### (Configuration)

As shown in FIG. 3, the effective misfire determination part 27 includes an air-fuel ratio parameter acquisition portion 29 for calculating or estimating, on the basis of the operating state signal from the gas engine 3 and the exhaust gas state signal from the exhaust gas, the air-fuel ratio parameter P2 that is the indicator of the air-fuel ratio in the at least one cylinder.

Then, when the misfire detection part 9 detects the misfire state, the effective misfire determination part 27 determines whether or not the misfire is the effective misfire having the risk of the unburned fuel burning in the exhaust gas duct, by comparing the value of the air-fuel ratio parameter P2 with an effective misfire determination threshold of the air-fuel ratio parameter P2.

As shown in a control flow of the misfire detection method of FIG. 3, the determination in step S3 takes in the value of the air-fuel ratio parameter P2 calculated or estimated by the air-fuel ratio parameter acquisition portion 29 in step S11, compares the value of the air-fuel ratio parameter P2 with the effective misfire determination threshold, and if the value of the air-fuel ratio parameter P2 is greater than the effective misfire determination threshold, determines that the misfire is the effective misfire.

Depending on the definition of the air-fuel ratio parameter P2, the misfire may be determined to be the effective misfire if the value of the air-fuel ratio parameter P2 is less than the effective misfire determination threshold or is within a certain range. For example, when an air excess ratio λ is used as the air-fuel ratio parameter P2, if the air excess ratio λ exceeds the effective misfire determination threshold (corresponding to an upper limit of a flammable range), the air excess ratio λ falls outside the flammable range and no combustion is performed. Thus, the misfire is determined to be the effective misfire if the air excess ratio λ is less than the effective misfire determination threshold.

The air-fuel ratio parameter P2 that is the indicator of the air-fuel ratio in the cylinder is calculated or estimated by, for example, the following methods (A) to (E). Further, the air-fuel ratio parameter P2 may be calculated or estimated by a combination of the respective items of these (A) to (E).
(A) The air-fuel ratio calculated from actual measured fuel supply amount and air amount. Since the air-fuel ratio calculated from these actual measured values is based on actual measurement results, it has a problem with accuracy or responsiveness depending on an installation position of a measurement device or operating accuracy of measurement, but it is highly accurate because it is the actual measured values.
(B) The air-fuel ratio calculated and estimated from actual measured exhaust gas composition and fuel composition. For example, the air-fuel ratio is estimated by estimating a combustion state in the cylinder from a hydrocarbon (HC) concentration in the exhaust gas composition and the HC concentration in the fuel composition of hydrocarbon-based fuel gas. Although the air-fuel ratio is highly accurate, a time delay is likely to occur before a detection result of the exhaust gas composition is obtained.
(C) The air-fuel ratio estimated from operational data (a rotation speed from moment to moment, an air supply temperature, an air supply pressure, a fuel supply amount, etc.) From these operational data, the amounts of fuel and air currently supplied into the cylinder are estimated and calculated. Although the air-fuel ratio has high responsiveness, the amount of data processed increases, which may lead to an increase in size of a control device or an increase in cost.
(D) A value based on an indicator value of the fuel supply amount (governor opening degree, etc.) Without an increase in data capacity, the value is highly responsive and practical.
   For example, whether or not there is the risk of the effective misfire occurring is determined on the basis of whether or not the governor opening degree (the indicator of the fuel amount) exceeds a predetermined threshold. That is, regardless of the air amount, by confirming in advance through testing, etc., that combustion does not occur in the exhaust gas duct if the fuel amount is less than the predetermined value, the parameter regarding the air-fuel ratio can be acquired with the simple configuration by using the governor opening degree which is the indicator of the fuel amount.
(E) The air-fuel ratio estimated from an operation setting value. Although the air-fuel ratio is poor in accuracy, it is effective when sufficient actual measured data cannot be detected. For example, the air-fuel ratio is calculated by estimating the fuel amount and the air amount from the engine output.

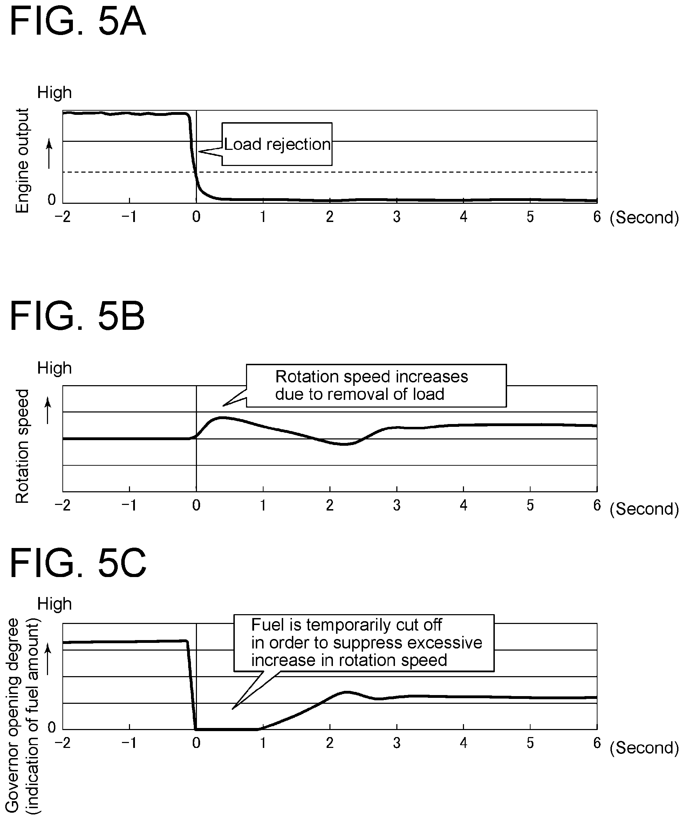

Herein, in the second embodiment, using the air excess ratio λ as the air-fuel ratio parameter P2, a behavior of the gas engine 3, which leads to the determination of the effective misfire during load rejection due to control or the malfunction, etc., will be described with reference to FIGs. 5A to 5F.

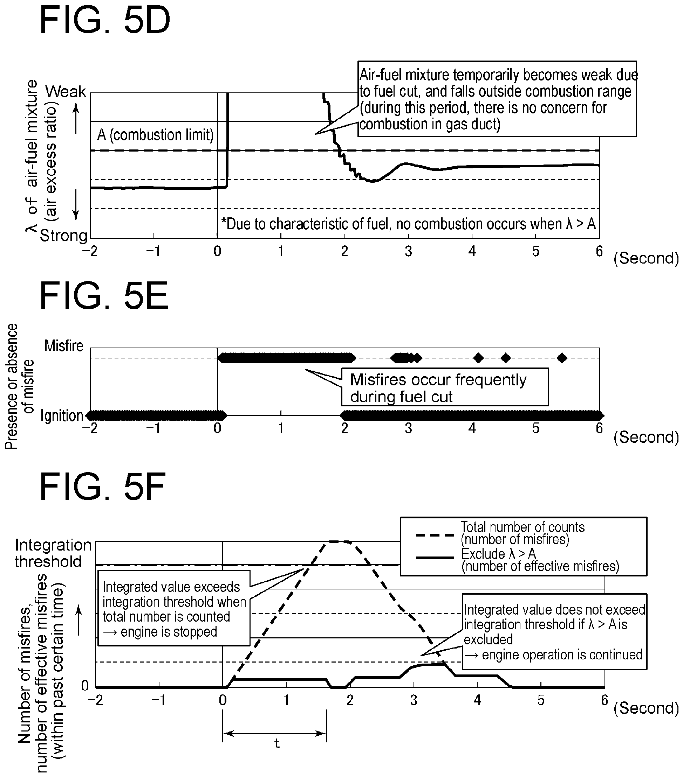

FIG. 5A shows a behavior of the engine output of the gas engine 3. The numbers on the horizontal axis indicate time (seconds) (hereinafter, the time axis of the horizontal axis is the same until FIG. 5F), and the vertical axis indicates the engine output. The time during the load rejection is set to 0 (zero) seconds.

In FIG. 5B, the vertical axis indicates the rotation speed after the load rejection, and the rotation speed temporarily increases due to removal of the load during the load rejection.

In FIG. 5C, the vertical axis indicates the governor opening degree (an indication of the fuel amount), and fuel is temporarily cut off in order to suppress an excessive increase in rotation speed during the load rejection.

In FIG. 5D, the vertical axis indicates the air excess ratio λ of an air-fuel mixture, and immediately after the load rejection, the air-fuel mixture temporarily becomes weak due to the fuel cut, exceeds a combustion limit A, and falls outside the combustion range. In the range exceeding this combustion limit A, there is no concern for combustion in the gas duct.

In FIG. 5E, the vertical axis indicates the presence or absence of the misfire. The presence or absence of the misfire is indicated and determined by the misfire detection part 9 on the basis of whether or not the pressure of each cylinder from the in-cylinder pressure sensor 7 is less than the pressure range during normal combustion. A state is shown in which during the fuel cut shown in FIG. 5C, misfires occur in all the cylinders, and as recovery from the fuel cut is achieved and fuel increases, the number of cylinders in an ignition state increases, but since combustion is unstable in the low load range, the misfiring cylinders are scattered.

In FIG. 5F, the vertical axis indicates the integrated value of the number of misfires (indicated by a dotted line), the number of effective misfires (indicated by a solid line), and indicates an integrated value within the past certain time (within t seconds). When the total number of misfires is counted, the integrated value reaches or exceeds the integration threshold and the engine is stopped. Meanwhile, when the air excess ratio λ exceeds the line of the combustion limit A due to the fuel cut as shown in FIG. 5D, the fuel falls outside the combustion range in the cylinder and there is no risk of leading to the combustion of the unburned fuel in the exhaust gas duct. By excluding the misfires in this state from the count, the integrated value of the effective misfires does not reach or exceed the integration threshold, and the engine continues to operate.

### (Operation/Effect)

According to the second embodiment, the effective misfire determination part 27 determines whether or not the misfire is the effective misfire on the basis of the air-fuel ratio parameter P2 that is the indicator of the air-fuel ratio in the at least one cylinder. Since the operation control signal used for operation control of the engine can be used, it is possible to expect simplification of the system configuration of the misfire detection device 1.

Further, as the air-fuel ratio parameter P2, when the indicator value (the governor opening degree, etc.) of the fuel supply amount as described in aforementioned (D) is used not as the air-fuel ratio but as the parameter regarding the air-fuel ratio, the system configuration of the misfire detection device 1 can further be simplified. That is, this is because regardless of the air amount, by confirming in advance through testing, etc., that combustion does not occur in the exhaust gas duct if the fuel amount is less than the predetermined value, the effective misfire determination part 27 can determine the effective misfire with the simpler configuration.

Further, the methods described in aforementioned (A) to (E) may be combined, and by not necessarily performing all of data measurements or calculations required for estimating the air-fuel ratio, a load on control calculation can be reduced, which can lead to faster processing or prevention of a control failure.

### <Third Embodiment>

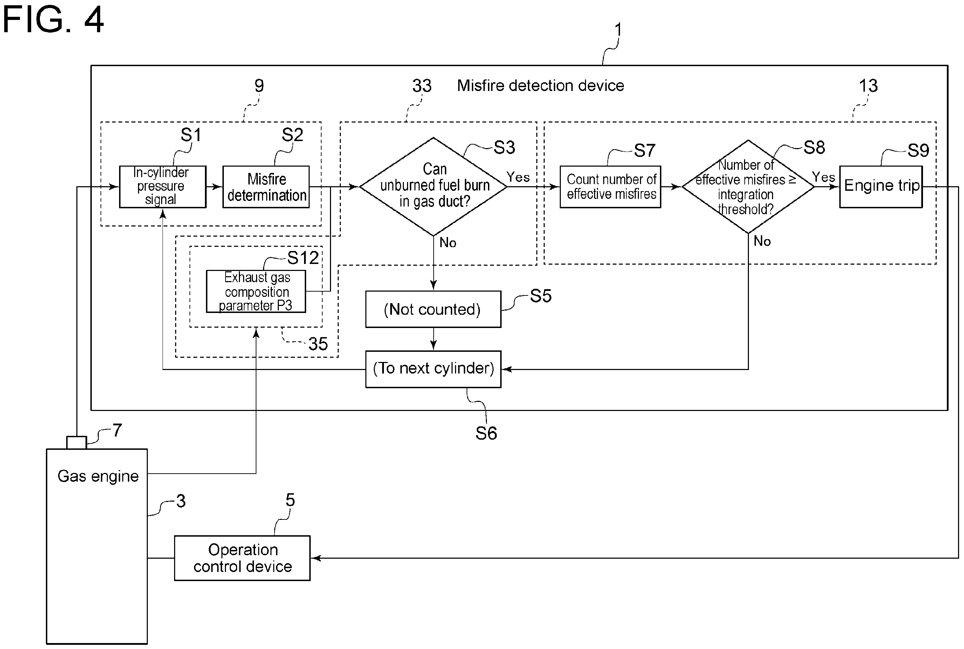

The third embodiment will be described with reference to FIG. 4. The third embodiment is different from the first embodiment in an effective misfire determination part 33. In the third embodiment, the unburned parameter P1 of the first embodiment is an exhaust gas composition parameter P3 based on a composition of the exhaust gas flowing in the exhaust gas duct, in particular, the exhaust gas composition parameter P3 uses the unburned fuel concentration and/or the oxygen concentration in the exhaust gas, and the effective misfire determination part 33 determines the effective misfire on the basis of the exhaust gas composition parameter P3. In the third embodiment, the same constituent elements as those in the first embodiment are associated with the same reference signs and not described again in detail.

### (Configuration)

As shown in FIG. 4, the effective misfire determination part 33 includes an exhaust gas composition acquisition portion 35 for actually measuring the exhaust gas composition of the exhaust gas from the gas engine 3 and acquiring the exhaust gas composition parameter P3 used as the unburned parameter P1.

Then, when the misfire detection part 9 detects the misfire state, the effective misfire determination part 33 determines, by comparing the concentration of the exhaust gas composition parameter P3 based on the actually measured exhaust gas composition with an effective misfire determination threshold of the exhaust gas composition parameter P3, whether or not the concentration of the unburned fuel in the exhaust gases discharged from inside the cylinder has the risk of combustion in the exhaust gas duct through which the exhaust gas from the gas engine 3 during the misfire flows.

As shown in a control flow of the misfire detection method of FIG. 4, the determination in step S3 takes in the value of the exhaust gas composition parameter P3 calculated or estimated by the exhaust gas composition acquisition portion 35 in step S12, compares the value of the exhaust gas composition with the effective misfire determination threshold, and if the value of the exhaust gas composition parameter P3 is greater than the effective misfire determination threshold, determines that the misfire is the effective misfire.

As the exhaust gas composition parameter P3, in particular, an unburned content concentration is used. As an unburned gas, a hydrocarbon (THC) concentration, a carbon monoxide (CO) concentration is used. In the case of an engine that uses hydrogen gas as a fuel gas, the hydrogen (H2) concentration is used.

When hydrocarbon-based fuel gas is used, incomplete combustion in the cylinder emits a lot of incompletely unburned hydrocarbons (THC), and the incomplete combustion in the cylinder also emits a lot of carbon monoxide (CO). Further, in the case of a hydrogen engine, when the incomplete combustion occurs in the cylinder, hydrogen (H2) is emitted as it is.

As the exhaust gas composition parameter P3, in addition to using the measured exhaust gas composition as it is, an indicator value (such as the air-fuel ratio of the exhaust gas) calculated on the basis of the exhaust gas composition or other data may be used.

The effective misfire determination threshold for determining whether there is the risk of the concentration of the unburned fuel in the exhaust gas burning in the exhaust gas duct may be set for each unburned content concentration, or may be set according to the proportion of each unburned content.

Further, the effective misfire determination threshold may be corrected on the basis of another component (the oxygen concentration, the carbon dioxide concentration, etc.) For example, since combustion is likely to occur when the oxygen concentration is high, the concentration of the effective misfire determination threshold for each unburned gas is corrected to a lower side so that correction is made such that the misfire is determined to be the effective misfire even if the unburned gas has the low concentration. Further, since combustion is unlikely to occur when the carbon dioxide concentration is high, the concentration of the effective misfire determination threshold for each unburned gas is corrected to a higher side so that correction is made such that the misfire is not determined to be the effective misfire until the unburned gas reaches the high concentration. By making such correction, it is possible to improve the reliability of the determination of the effective misfire by the exhaust gas composition parameter P3.

### (Operation/Effect)

According to the third embodiment, since the effective misfire determination part 33 determines whether or not the misfire is the effective misfire by using the exhaust gas composition parameter P3 in the exhaust gas duct as the indicator, the determination is based on the actual measured data of the exhaust gas. Therefore, the determination of the effective misfire is accurate, making it possible to reliably achieve both ensuring safety and improving operational continuity.

The contents described in the above embodiments would be understood as follows, for instance.
[1] A misfire detection device (1) for an engine (3) according to the present disclosure, includes: a misfire detection part (9) for detecting a misfire state in at least one cylinder of the engine; an effective misfire determination part (11, 27, 33) for determining, on the basis of an unburned parameter (P1) that is an indicator of an unburned fuel concentration in an exhaust gas duct, a risk of unburned fuel in the exhaust gas duct burning, when the misfire detection part detects the misfire state; and an engine stop processing control part (13) for performing stop processing of the engine on the basis of a determination result in the effective misfire determination part.
   According to the configuration as defined in the above [1], in the misfire detection device (1) for the engine (3), when the misfire detection part (9) detects the misfire state, the effective misfire determination part (11, 27, 33) determines, on the basis of the unburned parameter (P1) that is the indicator of the unburned fuel concentration in the exhaust gas duct, the effective misfire that poses the risk of leading to the combustion of the unburned fuel in the exhaust gas duct. Therefore, in the case where the unburned fuel does not burn in the exhaust gas duct even if the misfire occurs due to not control but the malfunction, etc., it is possible to improve the operational continuity by excluding the case from the protective action of stopping the engine. That is, it is possible to improve the operational continuity while ensuring safety by stopping the engine through monitoring of only the effective misfire that poses the risk of leading to the combustion of the unburned fuel in the exhaust gas duct.
[2] In some embodiments, in the configuration as defined in the above [1], the unburned parameter is an air-fuel ratio parameter that is an indicator of an air-fuel ratio in the at least one cylinder, and the effective misfire determination part (27) determines an effective misfire on the basis of the air-fuel ratio parameter.
   According to the configuration as defined in the above [2], since the effective misfire determination part (27) determines whether or not the misfire is the effective misfire on the basis of the air-fuel ratio parameter (P2) that is the indicator of the air-fuel ratio in the at least one cylinder, the operation control signal used for operation control of the engine can be used, making it possible to simplify the system configuration of the misfire detection device (1).
[3] In some embodiments, in the configuration as defined in the above [2], the air-fuel ratio parameter (P2) is an indicator value of a fuel supply amount into the at least one cylinder, and the effective misfire determination part (27) determines the effective misfire on the basis of whether or not the indicator value of the fuel supply amount exceeds a predetermined threshold.
   According to the configuration as defined in the above [3], it is possible to further simplify the system configuration of the misfire detection device (1). That is, this is because regardless of the air amount, by confirming in advance through testing, etc., that combustion does not occur in the exhaust gas duct if the fuel amount is less than the predetermined value, the effective misfire determination part (27) can determine the effective misfire with the simpler configuration.
[4] In some embodiments, in the configuration as defined in the above [1], the unburned parameter (P1) is an exhaust gas composition parameter (P3) based on a composition of an exhaust gas flowing in the exhaust gas duct, and the effective misfire determination part (33) determines an effective misfire on the basis of the exhaust gas composition parameter.
   According to the configuration as defined in the above [4], since the effective misfire determination part (33) determines whether or not the misfire is the effective misfire by using the exhaust gas composition parameter (P3) based on the actual measured data of the exhaust gas in the exhaust gas duct as the indicator, it is possible to achieve the improvement in determination accuracy of the effective misfire.
[5] In some embodiments, in the configuration as defined in the above [4], the exhaust gas composition parameter (P3) includes an unburned fuel concentration and an oxygen concentration in the exhaust gas, and the effective misfire determination part (33) determines an effective misfire on the basis of the unburned fuel concentration and the oxygen concentration.
   According to the configuration as defined in the above [5], since the unburned content concentration and the oxygen concentration, which greatly influence the combustion by the unburned fuel in the exhaust gas duct, are used to determine the effective misfire, the determination accuracy is further improved.
[6] In some embodiments, in the configuration as defined in any of the above [1] to [5], the engine stop processing control part (13) calculates an integrated value of the number of determinations of effective misfires from the effective misfire determination part (11, 27, 33) in a past certain time or a past certain cycle, and performs the stop processing of the engine if the integrated value exceeds a predetermined integration threshold.
   According to the configuration as defined in the above [6], since the engine stop processing control part (13) calculates the integrated value of the number of determinations of the effective misfires from the effective misfire determination part (11, 27, 33) in the past certain time or the past certain cycle, and performs the stop processing of the engine if the integrated value exceeds the predetermined integration threshold, old misfires disappear over time. Therefore, the risk of the combustion in the exhaust gas duct can be determined in the most recent misfire state, and the stop processing of the engine can be executed on the basis of the determination result.
[7] In some embodiments, in the configuration as defined in the above [6], the effective misfire determination part (11, 27, 33) is configured to determine the risk of the unburned fuel in the exhaust gas duct burning, by comparing the unburned parameter with an effective misfire determination threshold, and the engine stop processing control part (13) further has a number-of-effective-misfires correction portion (23) for weighting the integrated value of the number of determinations of the effective misfires in accordance with a magnitude of the unburned parameter in calculating the integrated value.
   According to the configuration as defined in the above [7], since the engine stop processing control part (13) further has the number-of-effective-misfires correction portion (23) for weighting the integrated value of the number of determinations of the effective misfires in accordance with the magnitude of the unburned parameter in calculating the integrated value, reliability of the engine stop processing is improved, and it is possible to improve the operational continuity while ensuring safety.
[8] In some embodiments, in the configuration as defined in the above [6 or 7], the past certain time or the past certain cycle and the integration threshold are set to larger values from startup to low load than at high load.
   According to the configuration as defined in the above [8], since the past certain time or the past certain cycle and the integration threshold are set to the larger values from startup to low load than at high load, it is possible to suppress unnecessary engine stop due to the transient event caused by the fact that combustion becomes unstable and the sporadic misfire is likely to occur at startup or in the low load range.
[9] A misfire detection method for an engine according to the present disclosure, includes: a misfire detection step (steps S1-S2 of the first embodiment) of detecting a misfire state in at least one cylinder of the engine; an effective misfire determination step (steps S3-S4 of the first embodiment) of determining, on the basis of an unburned parameter that is an indicator of an unburned fuel concentration in an exhaust gas duct, a risk of unburned fuel in the exhaust gas duct burning, when the misfire state is detected in the misfire detection step; and an engine stop processing step (steps S7-S9 of the first embodiment) of performing stop processing of the engine on the basis of a determination result in the effective misfire determination step.

According to the configuration as defined in the above [9], in the misfire detection method for the engine, when the misfire state is detected by the misfire detection step, the effective misfire that poses the risk of leading to the combustion of the unburned fuel in the exhaust gas duct is determined by the effective misfire determination step on the basis of the unburned parameter that is the indicator of the unburned fuel concentration in the gas duct. Therefore, in the case where the unburned fuel does not burn in the exhaust gas duct even if the misfire occurs due to not control but the malfunction, etc., it is possible to improve the operational continuity by excluding the case from the protective action of stopping the engine. That is, it is possible to improve the operational continuity while ensuring safety by stopping the engine through monitoring of only the effective misfire that poses the risk of leading to the combustion of the unburned fuel in the exhaust gas duct.

### Reference Signs List

- 1: Misfire detection device
- 3: Gas engine (engine)
- 5: Operation control device
- 7: In-cylinder pressure sensor
- 9: Misfire detection part
- 11, 27, 33: Effective misfire determination part
- 13: Engine stop processing control part
- 17: Unburned parameter acquisition portion
- 23: Number-of-effective-misfires correction portion
- 29: Air-fuel ratio parameter acquisition portion
- 35: Exhaust gas composition acquisition portion
- P1: Unburned parameter
- P2: Air-fuel ratio parameter
- P3: Exhaust gas composition parameter

## Claims

1. A misfire detection device for an engine, comprising:
a misfire detection part for detecting a misfire state in at least one cylinder of the engine;
an effective misfire determination part for determining, on the basis of an unburned parameter that is an indicator of an unburned fuel concentration in an exhaust gas duct, a risk of unburned fuel in the exhaust gas duct burning, when the misfire detection part detects the misfire state; and
an engine stop processing control part for performing stop processing of the engine on the basis of a determination result in the effective misfire determination part.

2. The misfire detection device for the engine according to claim 1,
wherein the unburned parameter is an air-fuel ratio parameter that is an indicator of an air-fuel ratio in the at least one cylinder, and
wherein the effective misfire determination part determines an effective misfire on the basis of the air-fuel ratio parameter.

3. The misfire detection device for the engine according to claim 2,
wherein the air-fuel ratio parameter is an indicator of a fuel supply amount into the at least one cylinder, and
wherein the effective misfire determination part determines the effective misfire on the basis of whether or not the fuel supply amount exceeds a predetermined threshold.

4. The misfire detection device for the engine according to claim 1,
wherein the unburned parameter is an exhaust gas composition parameter based on a composition of an exhaust gas flowing in the exhaust gas duct, and
wherein the effective misfire determination part determines an effective misfire on the basis of the exhaust gas composition parameter.

5. The misfire detection device for the engine according to claim 4,
wherein the exhaust gas composition parameter includes an unburned fuel concentration and an oxygen concentration in the exhaust gas, and
wherein the effective misfire determination part determines an effective misfire on the basis of the unburned fuel concentration and the oxygen concentration.

6. The misfire detection device for the engine according to any one of claims 1 to 5,
wherein the engine stop processing control part calculates an integrated value of the number of determinations of effective misfires from the effective misfire determination part in a past certain time or a past certain cycle, and performs the stop processing of the engine if the integrated value exceeds a predetermined integration threshold.

7. The misfire detection device for the engine according to claim 6,
wherein the effective misfire determination part is configured to determine the risk of the unburned fuel in the exhaust gas duct burning, by comparing the unburned parameter with an effective misfire determination threshold, and
wherein the engine stop processing control part further has a number-of-effective-misfires correction portion for weighting the integrated value of the number of determinations of the effective misfires in accordance with a magnitude of the unburned parameter in calculating the integrated value.

8. The misfire detection device for the engine according to claim 6 or 7,
wherein the past certain time or the past certain cycle and the integration threshold are set to larger values from startup to low load than at high load.

9. A misfire detection method for an engine, comprising:
a misfire detection step of detecting a misfire state in at least one cylinder of the engine;
an effective misfire determination step of determining, on the basis of an unburned parameter that is an indicator of an unburned fuel concentration in an exhaust gas duct, a risk of unburned fuel in the exhaust gas duct burning, when the misfire state is detected in the misfire detection step; and
an engine stop processing control step of performing stop processing of the engine on the basis of a determination result in the effective misfire determination step.
